# EUROPÄISCHE PATENTSCHRIFT

(11) **EP 0 345 491 B1**
(45) Veröffentlichungstag und Bekanntmachung des Hinweises auf die Patenterteilung: **14.08.1996**
(21) Anmeldenummer: 89108718.1
(22) Anmeldetag: 16.05.1989
(51) Int. Cl.: B01D 29/33, B01D 29/52, B01D 37/02

(54) **Filter zum Abscheiden von Feststoffteilchen aus heissen, gasförmigen oder flüssigen Medien**
Filter for the separation of solids from heat gaseous or liquid media
Filtre de séparation de particules solides de milieux chauds, gazeiformes ou liquides

(30) Priorität: 04.06.1988 DE 3819056; 16.05.1989 DE 3915845
(43) Veröffentlichungstag der Anmeldung: 13.12.1989
(73) Patentinhaber: Herding GmbH, D-92224 Amberg (DE)
(72) Erfinder: Herding, Walter, D-8450 Amberg (DE); Rausch, Walter, D-8503 Altdorf (DE)
(74) Vertreter: Klunker . Schmitt-Nilson . Hirsch

(56) Entgegenhaltungen:
- EP-A- 0 074 735
- EP-A- 0 228 631
- WO-A-83/01012
- WO-A-85/04595
- WO-A-87/01610
- DE-B- 1 261 046
- DE-C- 554 987
- DE-U- 8 426 130
- US-A- 2 892 510
- US-A- 4 735 635
- PATENT ABSTRACTS OF JAPAN vol. 11, no. 349 (C- 456)(2796), 14 November 1987; & JP - A - 62121614 (TORAY IND.) 02.06.1987

## Beschreibung

Gemäß Anspruch 1 ist ein erster Gegenstand der Erfindung ein Heißfluid-Filterelement, insbesondere zum Abscheiden von Feststoffteilchen aus heißen Rauchgasen im Temperaturbereich zwischen 120 und 800°C, bestehend aus:
(a) einem formstabilen, hitzebeständigen, durchlässig-porösen Tragkörper aus untereinander verbundenen Partikeln aus Keramik und/oder Glas;
(b) und einer hitzebeständigen, durchlässig-porösen Beschichtung an der mit dem Heißfluid zu beaufschlagenden Oberfläche des Filterelements, welche Beschichtung Partikel aus Keramik und/oder Glas sowie ein anorganisches Bindemittel enthält und durch Einbrennen einer aufgebrachten Beschichtungsmasse erzeugt ist;
(c) wobei die Beschichtung eine geringere Porengröße als der Tragkörper besitzt und wobei die linearen Wärmeausdehnungskoeffizienten des Tragkörpers, der Beschichtungspartikel und des Bindemittels im wesentlichen gleich sind;
dadurch gekennzeichnet,
(d) daß die poröse Beschichtung aus den mittels des Bindemittels untereinander und mit dem Tragkörper verbundenen Beschichtungspartikeln besteht, wobei die Porosität der Beschichtung Ergebnis der Verflüchtigung einer Suspendierflüssigkeit und eines herausbrennbaren Bestandteils der Beschichtungsmasse bei deren Einbrennen ist;
(e) daß die Poren des Tragkörpers an dessen Beschichtungsoberfläche mindestens zu einem Teil ihrer Tiefe durch die mittels des Bindemittels verbundenen Beschichtungspartikel ausgefüllt sind;
(f) und daß die Porengröße der Beschichtung kleiner als 10 µm ist.

In den abhängigen Ansprüchen 2 bis 7 sind bevorzugte Weiterbildungen des Filterelements gekennzeichnet.

Gemäß Anspruch 8 ist ein zweiter Gegenstand der Erfindung eine Heißfluid-Filtervorrichtung, insbesondere zum Abscheiden von Feststoffteilchen aus heißen Rauchgasen im Temperaturbereich zwischen 120 und 800°C, aufweisend:
(a) ein Gehäuse, das durch eine erste Halterung in einen Filtrierraum und einen Reinraum unterteilt ist;
(b) und mehrere röhrenförmige Filterelemente, die in dem Filtrierraum zwischen der ersten Halterung und einer zweiten Halterung gefedert befestigt sind, dadurch gekennzeichnet,
(c) daß die Filterelemente so aufgebaut sind, wie in einem der Ansprüche 1 bis 7 angegeben.

In den abhängigen Ansprüchen 9 bis 17 sind bevorzugte Weiterbildungen der Filtervorrichtung gekennzeichnet.

Gemäß Anspruch 18 ist ein dritter Gegenstand der Erfindung ein Verfahren zum Herstellen eines Heißfluid-Filterelements, insbesondere zum Abscheiden von Feststoffteilchen aus heißen Rauchgasen im Temperaturbereich zwischen 120 und 800°C, mit folgenden Schritten:
(a) Erzeugen eines formstabilen, hitzebeständigen, durchlässig-porösen Tragkörpers aus untereinander verbundenen Partikeln aus Keramik und/oder Glas;
(b) Aufbringen einer Beschichtungsmasse, die Partikel aus Keramik und/oder Glas sowie ein anorganisches Bindemittel enthält, auf den Tragkörper an der mit dem Heißfluid zu beaufschlagenden Oberfläche des Filterelements;
(c) und Einbrennen der Beschichtungsmasse, wobei sich eine hitzebeständige, durchlässig-poröse Beschichtung des Tragkörpers mit einer geringeren Porengröße als der Tragkörper ergibt und die linearen Wärmeausdehnungskoeffizienten des Tragkörpers, Beschichtungspartikel und des Bindemittels im wesentlichen gleich sind,
dadurch gekennzeichnet,
(d) daß die aufgebrachte Beschichtungsmasse die Beschichtungspartikel, das Bindemittel, eine Suspendierflüssigkeit und einen herausbrennbaren Bestandteil enthält;
(e) und daß durch das Einbrennen der Beschichtungsmasse die Suspendierflüssigkeit sowie der herausbrennbare Bestandteil zur Verflüchtigung gebracht werden und die poröse Beschichtung aus den mittels des Bindemittels untereinander und mit dem Tragkörper verbundenen Beschichtungspartikeln gebildet wird, wobei die Poren des Tragkörpers an dessen Beschichtungsoberfläche mindestens zu einem Teil ihrer Tiefe durch die mittels des Bindemittels verbundenen Beschichtungspartikel ausgefüllt sind und die Porengröße der Beschichtung kleiner als 10 µm ist.

In den abhängigen Ansprüchen 19 bis 25 sind bevorzugte Weiterbildungen des Verfahrens gekennzeichnet.

Durch die Erfindung wird die Aufgabe gelöst, ein für heiße Fluide geeignetes Filterelement zu schaffen, das trotz Hochtemperaturbelastung seine Formstabilität und Filterwirkung beibehält und nicht zu Rissen oder Abspaltungen von Materialbestandteilen neigt. Die Filterelemente können absolut dicht an ihren Halterungen befestigt werden und ohne großen Aufwand an diesen montiert und demontiert werden. Die Filterelemente bleiben derart an den Halterungen angelegt, daß sie selbst durch mechanische Beanspruchungen, insbesondere durch das Abreinigen, nicht beschädigt werden.

Ein Heißfluid-Filterelement mit den Merkmalen des Oberbegriffs des Anspruchs 1 und ein Verfahren zum Herstellen eines Heißfluid-Filterelements mit den Merkmalen des Oberbegriffs des Anspruchs 18 sind aus dem Dokument WO-A-87/01610 bekannt. Bei diesem Filterelement ist die Beschichtung als dünnes Diaphragma ausgebildet, das außer den Partikeln aus Keramik und/oder Glas und anorganischem Bindemittel Fasern zum Verankern der Beschichtungspartikel an dem Tragkörper aufweist. Die Beschichtungspartikel sind durch das Bindemittel in erster Linie an die Fasern und die Tragkörper-Partikel gebunden. Abschnitte der Fasern zwischen denjenigen Stellen, wo sie über Beschichtungspartikel gegenseitig verbunden sind, sollen zur Schaffung einer Mikrobeweglichkeit des Diaphragmas elastisch verformbar sein.

Aus dem Dokument WO-A-85/04595 ist ein Filterelement bekannt, das einen durchlässig-porösen Tragkörper z.B. aus Glasteilchen und eine poröse Beschichtung z.B. aus kleineren Glasteilchen aufweist. Fasern zum Verankern der Beschichtungspartikel sind nicht vorgesehen. Die Poren des Tragkörpers sind an dessen Beschichtungsoberfläche zu einem Teil ihrer Tiefe durch die Beschichtungspartikel ausgefüllt, wobei die Porengröße der Beschichtung kleiner als 10 µm sein kann. Die Beschichtungsmasse kann eine wäßrige Suspension der Beschichtungspartikel, ferner aufweisend einen Haftvermittler, sein. Einen herausbrennbaren Bestandteil enthält die Beschichtungsmasse nicht. Das bekannte Filterelement ist nicht als Heißfluid-Filterelement konzipiert, und in dem Dokument WO-A-85/04595 sind Gesichtspunkte, die bei für Heißfluid-Filtration geeigneter Ausbildung zu beachten sind, nicht beschrieben.

Die Filtration von Heißgasen mit Temperaturen von mehr als 250°C nimmt an Bedeutung zu, weil der hohe Wärmeinhalt des gereinigten Gases dann ohne weitere Maßnahmen genutzt werden kann und weil filtrierte Rauchgase eine geringere Umweltbelastung mit sich bringen. Die erfindungsgemäßen Filterelemente sind zum Filtern gasförmiger oder flüssiger Fluide geeignet.

Bei dem fertigen Filterelement sind die Beschichtungspartikel mittels des Bindemittels teilweise miteinander und teilweise mit dem Tragkörper verbunden. Der Tragkörper und die Beschichtung haben gleiches bis annähernd gleiches Wärmedehnverhalten, so daß das Filterelement weder zu Beschädigungen noch zu Erweiterungen der Poren, insbesondere der Beschichtung, neigt. Diese besondere Konzeption des Filterelements gewährleistet eine exzellente Filterwirkung, selbst bei stark schwankenden Temperaturen des zu filternden Fluids, so daß sich das Filterelement besonders für Heißgase im Temperaturbereich ab 250°C bis hin zu 600 - 800°C bestens eignet. Dadurch, daß alle Materialien und damit auch alle Strukturen des Filterelements ohne Schäden den Temperaturschwankungen folgen können, ist es kaum möglich, daß Risse oder Abplatzungen, insbesondere in der Beschichtung, auftreten, so daß bei dem Filterelement eine Oberflächenfiltration stattfindet, die den Vorteil einer weitestgehend verstopfungsfreien Filterwirkung gewährleistet. Durch die Oberflächenfiltration werden zunehmende Druckverluste vermieden, so daß das Filterelement mit gleichbleibendem, geringem Energieaufwand betrieben werden kann.

Die unterschiedlichen Strukturen des Filterelements können entsprechend den Anforderungen an das Filterelement auch variiert werden, so daß beispielsweise dem Tragkörper eine mehr oder weniger große Porenweite verliehen werden kann. Analog dieser Porenweite kann auch die Porenweite der Beschichtung mehr oder weniger groß gestaltet werden, z.B. in der Art, daß auf den Tragkörper entweder grobkörniges oder feinkörniges Füllmaterial aufgetragen wird oder der Tragkörper mit mehr oder weniger Schichten des Füllmaterials behaftet wird. Das Füllmaterial kann z.B. aus hitzbeständigen Glaskugeln, Keramikkörnern oder Keramikpulver bestehen, die nach Auftragen dort den Tragkörper filmartig überdecken.

In den Zeichnungen sind einige der möglichen Ausführungen der Erfindung schematisch dargestellt. Es zeigen:
- Fig. 1: eine Seitenansicht auf ein als zylindrische Röhre ausgeführtes Filterelement,
- Fig. 2: einen Schnitt durch das Filterelement in der Ebene II-II in Fig. 1,
- Fig. 3: eine Seitenansicht auf ein als Lamellenpaket ausgeführtes Filterelement,
- Fig. 4: einen Schnitt durch das Filterelement in der Ebene IV-IV in Fig. 3,
- Fig. 5: eine vergrößerte Draufsicht auf einen Ausschnitt des geschnittenen Filterelementes nach Fig. 1 oder 3 mit mehreren, die Deckschicht desselben bildenden Kugeln gleichen Durchmessers,
- Fig. 6: eine ähnliche, vergrößerte Draufsicht wie Fig. 5, jedoch mit Kugeln unterschiedlichen Durchmessers,
- Fig. 7: einen Schnitt durch das Filterelement im Bereich dessen Deckschicht mit einer Reihe an dieser angehäuften Kugeln und in das Trägermaterial eingelagerten Pulverpartikeln gem. Ausschnitt III,
- Fig. 8: einen Längsmittelschnitt durch ein Filtergehäuse mit mehreren Filterkerzen,
- Fig. 9: einen Querschnitt durch das Filtergehäuse mit zwei parallel angeordneten Filterkerzenreihen in der Ebene II-II in Fig. 1,
- Fig. 10: eine vergrößerte Ansicht auf ein als Filterkerze ausgeführtes Filterelement und die die Filterkerze dort haltenden Stützmittel im Schnitt,
- Fig. 11: einen vergrößerten Längsmittelschnitt durch den Kopf der Filterkerze mit der sie gegen deren Halterung abstützenden Rohrbüchse, und
- Fig. 12: einen vergrößerten Längsmittelschnitt durch den Fuß der Filterkerze mit dem sie gegen deren Halterung abstützenden Rundbolzen.

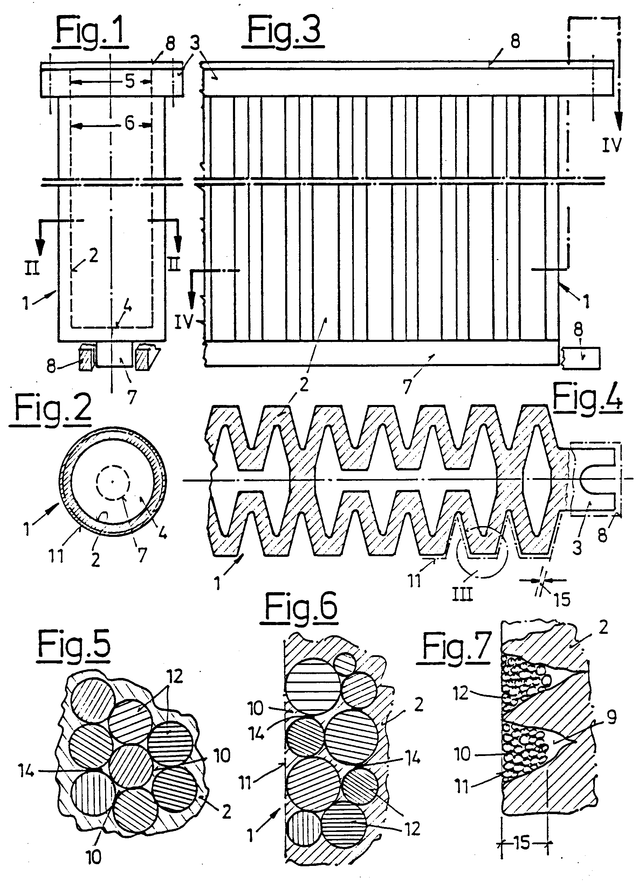

Das Filterelement 1 gemäß den Figuren 1 bis 7 wird hier am Beispiel zweier der möglichen Konfigurationen dargestellt und beschrieben. Eine einfache solche Konfiguration kann ein röhrenförmiges Filterelement 1 sein, wie es in Fig. 1 und 2 dargestellt ist. Dieses Filterelement 1 ist so gestaltet, daß es einen zylindrischen Tragkörper 2 bildet, der an seinem einen Ende einen flanschförmigen Kopf 3 und an seinem anderen Ende einen Boden 4 aufweist. Während der flanschförmige Kopf 3 in sich den Öffnungsquerschnitt 5 des Filterelementes 1, d. h. des Tragkörpers 2, der gleichzeitig dem Öffnungsquerschnitt 6 des zylindrischen Tragkörpers 2 etwa entspricht, aufweist, ist der Boden 4 des Tragkörpers 2 als Verschluß desselben ausgeführt und dort ggf. mit einem Fuß 7 versehen, um den Tragkörper 2 in einem Traggerüst 8 eines Filtergehäuses 13 fixieren zu können. Der Tragkörper 2 selbst, der aus einem hitzebeständigen Material, z. B. Keramik, gefertigt ist, weist eine großporige Struktur, d. h. große Poren 9, auf, auf die eine feinporige Struktur in Form einer, feine Poren 10 aufweisenden Deckschicht 11 aufgebracht ist. Diese Deckschicht 11 bildet die filtrierende Oberfläche des Filterelementes 1, an der sich die auszuscheidenden Partikel aus dem zu filternden Medium abscheiden.

Das Filterelement 1 gemäß der weiteren, möglichen Konfiguration nach Fig. 4 baut auf einem sogenannten Lamellenfilter auf, wie es z. B. in der DE-OS 34 13 213 dargestellt ist, und unterscheidet sich von diesem im wesentlichen dadurch, daß dessen Tragkörper 2 aus einem hitzebeständigen Werkstoff, z. B. keramischen Ursprungs, hergestellt ist und daß dessen Deckschicht 11 von einer Vielzahl mit dem Material des Tragkörpers 2 und/oder untereinander verbundenen, vorzugsweise kugel- und/oder pulverförmigen Partikeln 12 aus ebenfalls hitzebeständigem Material gebildet wird.

Die unterschiedlichen Teile des Filterelementes 1, d. h. der Tragkörper 2 und dessen Deckschicht 11, weisen unterschiedliche Porenweiten auf, wobei die Poren 9 des Tragkörpers 2 größer als die Poren 10 der Deckschicht 11 bemessen sein müssen, damit eine Filtration des Mediums an der Oberfläche des Filterelementes 1 stattfinden kann.

Dabei kann der Tragkörper 2 aus Keramik in Form eines Aluminiumoxyds (Al₂O₃), eines Zinkoxyds (ZnO₂) oder Siliziumoxyds (SiO₂) bestehen, wobei dessen Herstellung in der Weise erfolgen kann, daß das jeweils gewählte Material in herkömmlicher Weise zu einer Formmasse verarbeitet, z. B. zu Röhren extrudiert, und anschließend gebrannt wird, woraus dann der offenporige, d. h. großporige, Tragkörper 2 entsteht. Wird die Masse des Materials für den Tragkörper 2 hingegen in Formen gefüllt, was vielfach vorteilhafter sein kann, so können der flanschförmige Kopf 3 und der die Röhre verschließende Boden 4 mitgeformt werden.

Auf die äußere Mantelfläche des grobporigen Tragkörpers 2 wird die feinporige Deckschicht 11 entweder in Form einer Emulsion durch Besprühen oder Aufstreichen aufgetragen, wobei sich diese Emulsion vornehmlich in die Öffnungen bzw. Löcher des Tragkörpers 2 einnistet und dort die größeren Poren 9 durch eine Vielzahl kleiner Öffnungen bzw. Poren 10 überdeckt. Die kleinen Poren 10 der Deckschicht 11 werden dadurch hergestellt, daß das Material der Deckschicht 11, z. B. in Form von größeren und kleineren Körpern 12, z. B. Kugeln, sich partiell, z. B. punkt- oder linienförmig, miteinander verbindet und die nicht verbundenen Flächen die Öffnungen in Form von Poren 10 behalten. Diese Poren 10 bzw. Öffnungen können weitgehend beliebig in deren Größe dimensioniert werden, so daß die Deckschicht 11 bzw. der Überzug eine feinporige Schicht nach Art eines ein Medium noch durchlassenden Films bildet, welche eine feine Dimension deren Poren 10 aufweist.

Eine weitere Möglichkeit zum Aufbringen der Deckschicht 11 besteht darin, aus dem feinkörnigen Pulver für die Deckschicht 11 einen Schlicker herzustellen, wie er in ähnlicher Konsistenz zum Emaillieren verwendet wird. In diesen Schlicker kann der Tragkörper 2 eingetaucht werden. Die Deckschicht 11 wird dann, zusammen mit dem Material des Tragkörpers 2, eingebrannt, wodurch eine fein- und offenporige Engobe, ähnlich einer Glasur, erzeugt wird.

Für das Herstellen des Filterelementes 1 aus diesen hitzebeständigen Materialien wird zuerst davon ausgegangen, für das Material des Tragkörpers 2 und dessen Deckschicht 11 Bestandteile gleicher Grundstoffe zu nehmen, wobei der mitverwendete Haftvermittler bzw. Bindemittel beim Erhitzen dieser Materialien (z. B. beim Einbrennvorgang) ein Zusammenschmelzen dieser Materialien an deren Oberfläche nach Art eines Sinterns bewirkt, wodurch eine homogene, feste Verbindung entsteht.

Dies ist der Fall und wurde auch durch div. Versuche festgestellt bei Material für den Tragkörper 2 und die Deckschicht 11 aus Aluminiumoxyd (Al₂O₃) sowie einem Keramikkleber ähnlicher Konsistenz.

Ähnlich stabile Gebilde entstehen, wenn chemisch nicht identische, aber ähnliche Stoffe zusammen eingesetzt werden und diese sich im flüssigen Zustand miteinander mischen (Eutektikum z. B. aus Al₂O₃ und SiO₂ oder ZnO₂ und SiO₂). Auch ist eine chemische Verbindung von Material für den Tragkörper 2 und die Deckschicht 11 möglich, sofern sie bei der Einsatztemperatur beständig ist und etwa die gleiche oder bessere chemische Resistenz gegen Strukturänderungen aufweist, wie das Tragkörper- oder Deckschicht-Material. Die partielle Verbindung zwischen dem Tragkörper- und Deckschicht-Material erfolgt durch ein Bindemittel bzw. einen Haftvermittler 14, der je nach Verbindungsart beim Einbrennvorgang ähnlich einer aufgebrachten Glasur oder als eine Klebeverbindung ausgeführt sein kann.

Die Dicke 15 der Beschichtung, d. h. der Deckschicht 11, kann den jeweils gestellten Anforderungen an Reinheitsgrad des Mediums dadurch leicht angepaßt werden, daß auf den Tragkörper 2 mehr oder weniger Deckmaterial aufgebracht wird. Durch diese Maßnahme kann auch die Filterwirkung der Deckschicht 11 entsprechend gesteigert werden.

Die Verbindung der Deckschicht 11, d. h. deren Füllmaterials, mit dem Tragkörpermaterial ist vorzugsweise eine homogene, innige Verbindung, die in der Regel nicht gelöst werden kann. Dies ist insofern wichtig, als die Deckschicht 11 vom Tragkörpermaterial nicht abgewaschen werden kann, was sonst bei der Filtration von Flüssigkeiten leicht der Fall sein könnte.

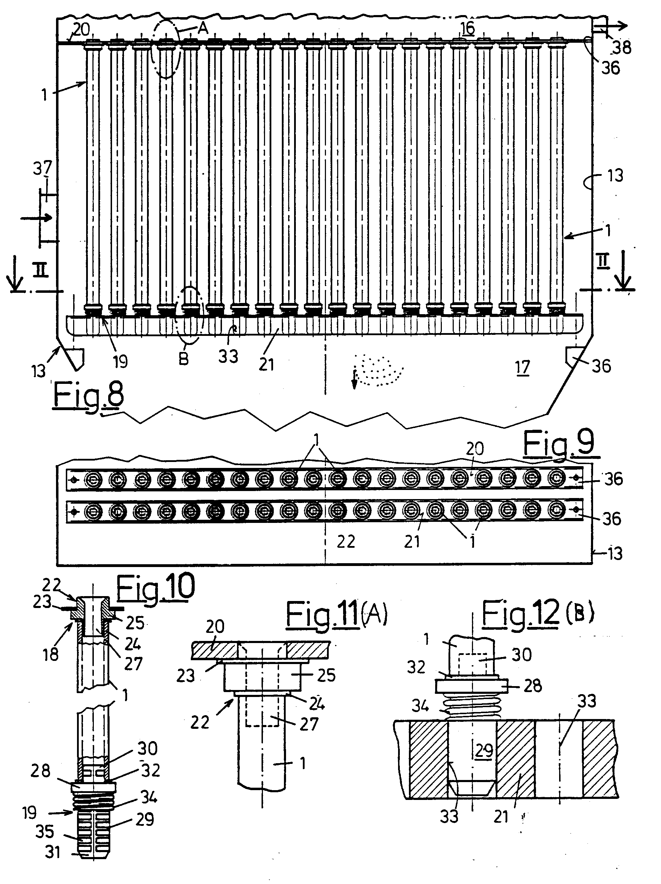

Das erfindungsgemäße Filterelement 1 gemäß dem Ausführungsbeispiel nach den Fig. 8 - 12 unterscheidet sich kaum von dem Filterelement nach Fig. 1 - 7 und dient ebenfalls zum Ausscheiden von Partikeln aus gasförmigen oder flüssigen Medien. Dem besseren Verständnis wegen ist dieses Filterelement 1 als Röhre bzw. Filterkerze ausgeführt und in einem Filtergehäuse 13 zusammen mit mindestens einem weiteren Filterelement 1 angeordnet. Das Gehäuse 13 selbst weist einen Reinraum 16 für das filtrierte Medium und einen Austragsschacht 17 für die Partikel sowie Ein- und Austrittsstutzen 37 und 38 für das Medium auf. Das Filterelement 1 ist vorzugsweise ebenfalls aus einem keramischen Material hergestellt, welches z. B. aus einem größere Poren 9 aufweisenden Tragkörper 2 und einer Oberflächenbeschichtung, d. h. Deckschicht 11, mit feinen Poren 10 besteht. Die Befestigung des Filterelementes 1, d. h. der jeweiligen Filterkerze, im Filtrierraum des Filtergehäuses 13 kann vertikal oder horizontal vorgenommen werden, wobei jede Filterkerze an ihren Enden, d. h. Kerzenkopf 18 und Kerzenfuß 19, besondere Befestigungsteile aufweist, über die sie an Halterungen 20, 21 im Filtrierraum fixiert ist. Die Befestigungsteile am Kerzenkopf 18 werden im wesentlichen von einer injektorförmigen Rohrbüchse 22 und mindestens einer Dichtung 23, 24 gebildet, von denen die Rohrbüchse 22 neben einem Ringbund 25 einen in den Reinraum 16 ragenden Kragen 26 und ein in das Filterelement 1 eintauchendes Hemd 27 aufweist. Der Ringbund 25, der etwa die Gürtellinie der Rohrbüchse 22 bildet, weist einen größeren Durchmesser als der Mantel des Filterelementes 1 auf. Dadurch weist die Rohrbüchse 22 ausreichend große Auflagen auf, einerseits für ein Ende des Filterelementes 1 und andererseits zum Abstützen gegen die Halterung 20 am reingasseitigen Ende.

Um die Abdichtung dabei sehr wirkungsvoll zu machen, empfiehlt es sich, an beiden Seiten des Ringbundes 25, also koaxial zu diesem, Dichtungen 23, 24 vorzusehen, von denen die eine als Ringdichtung 23 ausgebildet ist und die andere Dichtung 24, neben der Ringfläche, auch eine sackartige Erweiterung aufweisen könnte. Die sackartige Erweiterung würde in einem solchen Fall das in das Filterelement 1 tauchende Hemd 27 konzentrisch umschließen und dort sowohl eine Abdichtung als auch eine radiale, elastische Abstützung übernehmen. Selbstverständlich ist es auch denkbar, statt der sackartigen Dichtung auch an dieser Stelle eine Ringdichtung 32 vorzusehen und die Filterkerze nebst Halterung 20 nur über diese Dichtung gegenseitig abzustützen.

Das andere Ende des Filterelementes 1 ist primär auf dem Bund 28 eines Rundbolzens 29 abgestützt, wobei dieser Bolzen - ähnlich der Rohrbüchse 22 - ebenfalls einen Kragen 30 und einen diesem entgegengesetzt gerichteten Fortsatz 31 aufweist. Mit dem Kragen 30 steckt der Rundbolzen 29 bis zum Bund 28 im freien Ende des Filterelementes 1, wobei der Kragen 30 zwischen sich und dem Innenumfang des Filterelementes 1 kein oder nur ein geringes, radiales Spiel aufweisen kann. Die eigentliche Abdichtung dieses Endes des Filterelementes 1 am Kerzenfuß 19 erfolgt, wie auch am Kerzenkopf 18, über eine Ringdichtung 32, gegen die sich das Ende des Filterelementes 1 dichtend anlegt. Der Fortsatz 31 des Rundbolzens 29 selbst taucht in eine Bohrung 33 der Halterung 21 ein und greift so weit in diese, daß das Filterelement 1 nicht nur gegen radiale Bewegungen, sondern auch gegen axiale, in der Bohrung geführt bleibt. Um das jeweilige Filterelement 1 hermetisch gegen den Filtrierraum des Filtergehäuses 13 abzudichten, ist zwischen dem Bund 28 des Rundbolzens 29 und der Halterung 21 eine Spiralfeder 34 um den Fortsatz 31 gelegt, die sich gegen den Bund 28 einerseits und gegen die Halterung 21 andererseits abstützt. Diese Spiralfeder 34 drückt das Filterelement 1 auch gegen die Dichtungen 23, 24 am Kerzenkopf 18, wie auch den Bund 28 gegen die Ringdichtung 32, so daß diese Dichtungen dort voll zur Anlage kommen.

Der Rundbolzen 29 selbst kann an seinem Kragen 30 und Fortsatz 31 vollwandig sein, oder er kann Ringnuten 35 aufweisen, wie dies in der Zeichnung Fig. 10 dargestellt ist. Auch könnte statt des Rundbolzens 29 ein äquivalentes Führungsteil, so beispielsweise eine tannenförmige Feder oder ein Armkreuz, verwendet werden. Ebenso könnte statt der Spiralfeder 34 eine Tellerfeder bzw. ein Tellerfederpaket verwendet werden, welches die axiale Vorspannung des Filterelementes 1 gewährleistet.

Die Halterungen 20, 21 selbst, die z. B. als U-förmige Streben ausgeführt werden können, sind mit ihren Enden an Konsolen 36 des Filtergehäuses 13 abgestützt und können dort starr oder elastisch abgestützt sein.

Das zu filtrierende Medium, welches durch den Eintrittsstutzen 37 in den Filtrierraum des Filtergehäuses 13 gelangt, umströmt die einzelnen Filterelemente 1 und gelangt durch sie in den Reinraum 16, während seine mitgeführten Partikel sich an den Mänteln der Filterelemente 1 anlagern. Das auf diese Weise in den Reinraum 16 gelangte Medium verläßt diesen über den Austrittsstutzen 38, um ins Freie zu gelangen oder einem weiteren Prozeß zugeführt zu werden. Die an den Filterkerzen angelagerten Partikel werden durch ein an sich bekanntes Gegenblasen der Filterkerzen, von innen nach außen, abgeworfen und gelangen in einen Austragschacht 17, aus dem sie kontinuierlich oder diskontinuierlich ausgetragen werden. Die Gegenblaseinrichtung kann eine an sich bekannte Jet-Reinigung sein, deren Düsen in die Öffnungen der injektorförmigen Rohrbüchsen 22 ihr Reinigungsmedium, z. B. Druckluft, einblasen.

Die Montage und Demontage der Filterelemente 1 wird bei dieser kerzenförmigen Ausführung besonders dadurch erleichtert, daß nach Einstecken des Fortsatzes 31 des Rundbolzens 29 in die Bohrung 33 der Halterung 21 und Eindrücken desselben gegen die Kraft der Spiralfeder 34 der Kragen 26 der Rohrbüchse 22 am Kerzenkopf 18 zuerst unter das Loch der Halterung 20 an diesem Ende gedrückt wird und nach langsamen Nachlassen des Preßdruckes der Kragen 26 in das Loch einrastet und die Filterkerze dort fixiert. Die Demontage der Filterkerze erfolgt in umgekehrter Reihenfolge, wenn es gilt, diese von deren Halterungen 20, 21 zu entfernen.

Die Zusammensetzung des Füllmaterials, d. h. der Deckschicht 11, welches auf den Tragkörper 2 aufgebracht wird, setzt sich gemäß einer vorteilhaften Materialwahl aus nachfolgenden Bestandteilen zusammen.

Diese Bestandteile, die als Gemenge dispergiert werden, werden auf den Tragkörper 2, z. B. mittels einer Bürste, aufgetragen, und es wird dieses Füllmaterial zusammen mit dem Tragkörper ca. 1 Stunde einer Temperatur von ca. 500° C ausgesetzt, wodurch sich das Füllmaterial in das Material bzw. die Poren 9 des Tragkörpers 2 einbrennt.

Die Bestandteile des Füllmaterials bzw. der Deckschicht 11 können sich wie folgt zusammensetzen:
- 1: Volumenanteil Natronwasserglas
- 14: Volumenteile Wasser
- 4: Volumenteile Kaolin
- 2: Volumenteile Feldspat
- 2: Volumenteile Stärke (Stärkemehl)
- 0,2: Volumenteile Natriumdyphosphat

Das auf diese Weise hergestellte und auf den Tragkörper 2 aufgebrachte Füllmaterial lagert sich im Bereich der Mantelfläche in den Poren 9 des Tragkörpers 2 ab und füllt diese so weit, daß auf der Oberfläche des Tragkörpers 2 eine filmartige Beschichtung entsteht. Dabei werden das Wasser bei Einwirken der Temperatur verdampft, und es wird die Stärke ebenfalls bei dieser Temperatur aus dem Gemenge durch Verbrennung ausgeschieden.

Wie oben bereits erwähnt, sind die Filterelemente 1 aus keramischem, hitzebeständigem Werkstoff hergestellt.

Das Filterelement 1 wurde hier zur Filtration von heißen Gasen dargestellt und erläutert. Selbstverständlich läßt sich das Filterelement 1 auch zur Filtration von heißen Flüssigkeiten oder nicht heißen Gasen oder Flüssigkeiten anwenden. Besonders interessant ist das Filterelement 1 auch für aggressive Medien im gasförmigen oder flüssigen Bereich, da es von den aggressiven Stoffen kaum angegriffen wird.

Das hitzebeständige Filterelement 1 wurde hier an den Beispielen der Rohre und des sogenannten Lamellenfilters, wie es in Fig. 1 - 4 gezeichnet ist, dargestellt und beschrieben. Selbstverständlich kann des Filterelement 1 auch andere Konfigurationen aufweisen. Von Vorteil ist es, hier die Konfiguration zu wählen, die die größtmögliche Filterfläche aufweist. Solch eine Konfiguration kann auch eine kombinierte sein, so etwa eine ovale, dreieckförmige u. a. Die Konfiguration wird meist vom zu filternden Volumen, der Standfestigkeit des Filterelementes 1, d. h. der Filterkerze, und dem zu filtrierenden Medium abhängen. Letzteres bestimmt auch die Porenweite, die zwecks Optimierung der Druckverluste auf das Medium abgestimmt wird.

Die Funktion des Filters ist hier, bezogen auf die Jet-Reinigung, am Beispiel des Abscheidens von Partikeln aus gasförmigen Medien dargestellt und beschrieben. Die Abscheidung von Partikeln aus Flüssigkeiten erfolgt in ähnlicher Weise, doch muß in einem solchen Fall die Abreinigung anders, d. h. durch Gegenstrom einer reinen Flüssigkeit, erfolgen. Sofern die Flüssigkeit ein Einblasen von Luft erlaubt, kann auch eine Preßluft für das Abreinigen eingesetzt werden.

## Patentansprüche

1. Heißfluid-Filterelement (1), insbesondere zum Abscheiden von Feststoffteilchen aus heißen Rauchgasen im Temperaturbereich zwischen 120 und 800°C, bestehend aus:
(a) einem formstabilen, hitzebeständigen, durchlässig-porösen Tragkörper (2) aus untereinander verbundenen Partikeln (12) aus Keramik und/oder Glas;
(b) und einer hitzebeständigen, durchlässig-porösen Beschichtung (11) an der mit dem Heißfluid zu beaufschlagenden Oberfläche des Filterelements (1), welche Beschichtung (11) Partikel aus Keramik und/oder Glas sowie ein anorganisches Bindemittel (14) enthält und durch Einbrennen einer aufgebrachten Beschichtungsmasse erzeugt ist;
(c) wobei die Beschichtung (11) eine geringere Porengröße als der Tragkörper (2) besitzt und wobei die linearen Wärmeausdehnungskoeffizienten des Tragkörpers (2), der Beschichtungspartikel und des Bindemittels (14) im wesentlichen gleich sind;
**dadurch gekennzeichnet,**
(d) daß die poröse Beschichtung (11) aus den mittels des Bindemittels (14) untereinander und mit dem Tragkörper (2) verbundenen Beschichtungspartikeln besteht, wobei die Porosität der Beschichtung (11) Ergebnis der Verflüchtigung einer Suspendierflüssigkeit und eines herausbrennbaren Bestandteils der Beschichtungsmasse bei deren Einbrennen ist;
(e) daß die Poren (9) des Tragkörpers (2) an dessen Beschichtungsoberfläche mindestens zu einem Teil ihrer Tiefe durch die mittels des Bindemittels (14) verbundenen Beschichtungspartikel ausgefüllt sind;
(f) und daß die Porengröße der Beschichtung (11) kleiner als 10 µm ist.

2. Filterelement (1) nach Anspruch 1,
**dadurch gekennzeichnet,**
daß die Partikel (12) des Tragkörpers (2) aus Aluminiumoxid und/oder Zinkoxid und/oder Siliziumoxid bestehen.

3. Filterelement (1) nach Anspruch 1 oder 2,
**dadurch gekennzeichnet,**
daß die Partikel der Beschichtung (11) aus Aluminiumoxid und/oder Zinkoxid und/oder Siliziumoxid bestehen.

4. Filterelement (1) nach einem der Ansprüche 1 bis 3,
**dadurch gekennzeichnet,**
daß das Bindemittel (14) Natronwasserglas ist.

5. Filterelement (1) nach einem der Ansprüche 1 bis 4,
**dadurch gekennzeichnet,**
daß die Suspendierflüssigkeit Wasser ist.

6. Filterelement (1) nach einem der Ansprüche 1 bis 5,
**dadurch gekennzeichnet,**
daß die Beschichtungsmasse folgende Zusammensetzung hat:
14 Volumenteile Wasser
4 Volumenteile Kaolin
2 Volumenteile Feldspat
2 Volumenteile Stärkemehl
1 Volumenteil Natronwasserglas
0,2 Volumenteile Natriumdyphosphat

7. Filterelement (1) nach einem der Ansprüche 1 bis 6,
**dadurch gekennzeichnet,**
daß die Beschichtung (11) zweischichtig ist, wobei die äußere Schicht feinporöser als die innere Schicht ist.

8. Heißfluid-Filtervorrichtung, insbesondere zum Abscheiden von Feststoffteilchen aus heißen Rauchgasen im Temperaturbereich zwischen 120 und 800°C, aufweisend:
(a) ein Gehäuse (13), das durch eine erste Halterung (20) in einen Filtrierraum und einen Reinraum (16) unterteilt ist;
(b) und mehrere röhrenförmige Filterelemente (1), die in dem Filtrierraum zwischen der ersten Halterung (20) und einer zweiten Halterung (21) gefedert befestigt sind,
**dadurch gekennzeichnet,**
(c) daß die Filterelemente (1) so aufgebaut sind, wie in einem der Ansprüche 1 bis 7 angegeben.

9. Filtervorrichtung nach Anspruch 8,
**dadurch gekennzeichnet,**
(a) daß die Filterelemente (1) jeweils mittels einer injektorförmigen Rohrbüchse (22) an der ersten Halterung (20) festgelegt sind,
(b) wobei die Rohrbüchse (22) einen Bund (25) aufweist und eine Dichtung (23) zwischen dem Bund (25) und der ersten Halterung (20) sowie eine Dichtung (24) zwischen dem Bund (25) und dem Filterelement (1) vorgesehen sind;
(c) daß die Filterelemente (1) jeweils mittels eines Rundbolzens (29) an der zweiten Halterung (21) festgelegt sind,
(d) wobei der Rundbolzen (29) einen Bund (28) aufweist und eine Dichtung (32) zwischen dem Bund (28) und dem Filterelement (1) vorgesehen ist;
(e) und daß zwischen dem Bund (28) des Rundbolzens (29) und der zweiten Halterung (21) eine Feder (34) zum gefederten Einspannen des Filterelements (1) zwischen der ersten Halterung (20) und der zweiten Halterung (21) und zu dessen Anpressen gegen die Dichtungen (23, 24, 32) angeordnet ist.

10. Filtervorrichtung nach Anspruch 9,
**dadurch gekennzeichnet,**
daß die Rohrbüchse (22) einen über den Bund (25) vorstehenden, in das Filterelement (1) ragenden Bereich (27) und einen entgegengesetzt über den Bund (25) vorstehenden, durch eine Öffnung in der ersten Halterung (20) bis in den Reinraum (16) reichenden Bereich (26) aufweist.

11. Filtervorrichtung nach Anspruch 9 oder 10,
**dadurch gekennzeichnet,**
daß der Rundbolzen (29) einen über den Bund (28) vorstehenden, in das Filterelement (1) ragenden Bereich (30) und einen entgegengesetzt über den Bund (28) vorstehenden, in eine Bohrung (33) in der zweiten Halterung (21) ragenden Bereich (31) aufweist.

12. Filtervorrichtung nach Anspruch 11,
**dadurch gekennzeichnet,**
daß der entgegengesetzt vorstehende Bereich (31) des Rundbolzens (29) Ringnuten (35) aufweist.

13. Filtervorrichtung nach einem der Ansprüche 8 bis 12,
**dadurch gekennzeichnet,**
daß die erste Halterung (20) und/oder zweite Halterung (21) als U-förmige Strebe ausgebildet ist.

14. Filtervorrichtung nach einem der Ansprüche 8 bis 13,
**dadurch gekennzeichnet,**
daß mehrere Halterungen (20,21) nebeneinander, jeweils für eine Filterelement-Reihe, vorgesehen sind.

15. Filtervorrichtung nach einem der Ansprüche 8 bis 14,
**dadurch gekennzeichnet,**
daß sowohl die erste Halterung (20) als auch die zweite Halterung (21) im wesentlichen von einer Wand zu einer gegenüberliegenden Wand des Filtergehäuses (13) führen.

16. Filtervorrichtung nach einem der Ansprüche 8 bis 15,
**dadurch gekennzeichnet,**
daß die Einspannungen der Filterelemente (1) zwischen der ersten und der zweiten Halterung (20,21) schwimmend ausgeführt sind.

17. Filtervorrichtung nach einem der Ansprüche 9 bis 16,
**dadurch gekennzeichnet**
daß das Filterelement (1) gegen die Wirkung der Feder (34) so weit in Axialrichtung verschiebbar ist, daß der vorstehende Bereich (26) der Rohrbüchse (22) aus der Öffnung der ersten Halterung (20) freikommt.

18. Verfahren zum Herstellen eines Heißfluid-Filterelements (1), insbesondere zum Abscheiden von Feststoffteilchen aus heißen Rauchgasen im Temperaturbereich zwischen 120 und 800°C, mit folgenden Schritten:
(a) Erzeugen eines formstabilen, hitzebeständigen, durchlässigporösen Tragkörpers (2) aus untereinander verbundenen Partikeln (12) aus Keramik und/oder Glas;
(b) Aufbringen einer Beschichtungsmasse, die Partikel aus Keramik und/oder Glas sowie ein anorganisches Bindemittel (14) enthält, auf den Tragkörper (2) an der mit dem Heißfluid zu beaufschlagenden Oberfläche des Filterelements (1);
(c) und Einbrennen der Beschichtungsmasse, wobei sich eine hitzebeständige, durchlässig-poröse Beschichtung (11) des Tragkörpers (2) mit einer geringeren Porengröße als der Tragkörper (2) ergibt und die linearen Wärmeausdehnungskoeffizienten des Tragkörpers (2), Beschichtungspartikel und des Bindemittels (14) im wesentlichen gleich sind,
**dadurch gekennzeichnet,**
(d) daß die aufgebrachte Beschichtungsmasse die Beschichtungspartikel, das Bindemittel (14), eine Suspendierflüssigkeit und einen herausbrennbaren Bestandteil enthält;
(e) und daß durch das Einbrennen der Beschichtungsmasse die Suspendierflüssigkeit sowie der herausbrennbare Bestandteil zur Verflüchtigung gebracht werden und die poröse Beschichtung (11) aus den mittels des Bindemittels (14) untereinander und mit dem Tragkörper (2) verbundenen Beschichtungspartikeln gebildet wird, wobei die Poren (9) des Tragkörpers (2) an dessen Beschichtungsoberfläche mindestens zu einem Teil ihrer Tiefe durch die mittels des Bindemittels (14) verbundenen Beschichtungspartikel ausgefüllt sind und die Porengröße der Beschichtung (11) kleiner als 10 µm ist.

19. Verfahren nach Anspruch 18,
**dadurch gekennzeichnet,**
daß für die Partikel (12) des Tragkörpers (2) Aluminiumoxid und/oder Zinkoxid und/oder Siliziumoxid verwendet wird.

20. Verfahren nach Anspruch 18 oder 19,
**dadurch gekennzeichnet,**
daß für die Partikel der Beschichtung (11) Aluminiumoxid und/oder Zinkoxid und/oder Siliziumoxid verwendet wird.

21. Verfahren nach einem der Ansprüche 18 bis 20,
**dadurch gekennzeichnet,**
daß als Bindemittel (14) Natronwasserglas verwendet wird.

22. Verfahren nach einem der Ansprüche 18 bis 21,
**dadurch gekennzeichnet,**
daß als Suspendierflüssigkeit Wasser verwendet wird.

23. Verfahren nach einem der Ansprüche 18 bis 22,
**dadurch gekennzeichnet,**
daß eine Beschichtungsmasse folgender Zusammensetzung verwendet wird:
14 Volumenteile Wasser
4 Volumenteile Kaolin
2 Volumenteile Feldspat
2 Volumenteile Stärkemehl
1 Volumenteil Natronwasserglas
0,2 Volumenteile Natriumdyphosphat

24. Verfahren nach einem der Ansprüche 18 bis 23,
**dadurch gekennzeichnet,**
daß die Beschichtung (11) zweischichtig aufgebracht wird, wobei die äußere Schicht feinporöser als die innere Schicht ist.

25. Verfahren nach einem der Ansprüche 18 bis 24,
**dadurch gekennzeichnet,**
daß die Beschichtungsmasse durch Aufsprühen, Aufstreichen oder Eintauchen des Tragkörpers (2) aufgebracht wird.

## Claims

1. A hot fluid filter element (1), in particular for separating solid particles from hot flue gases in the temperature range between 120 and 800°C, consisting of:
(a) a refractory, permeably porous supporting body (2) of inherent stability and made of bonded together particles (12) of ceramics and/or glass;
(b) and a refractory, permeably porous coating (11) on the surface of the filter element (1) to be acted upon by the hot fluid, said coating (11) containing particles of ceramics and/or glass as well as an inorganic binder (14) and being produced by baking an applied coating mass;
(c) said coating (11) having a smaller pore size than the supporting body (2) and the coefficients of linear thermal expansion of the supporting body (2), the coating particles and of the binder (14) being substantially the same;
characterized in
(d) that the porous coating (11) consists of the coating particles bonded to each other and to the supporting body (2) by means of said binder (14), the porosity of the coating (11) being the result of the evaporation of a suspending liquid and of a burning-out component of the coating mass during baking thereof;
(e) that the pores (9) of the supporting body (2) at the coating surface thereof are filled, to at least part of their depth, by the coating particles bonded together by the binder (14);
(f) and in that the pore size of the coating (11) is smaller than 10 µm.

2. A filter element (1) according to claim 1,
characterized in that the particles (12) of the supporting body (2) consist of aluminium oxide and/or zinc oxide and/or silicon oxide.

3. A filter element (1) according to claim 1 or 2,
characterized in that the particles of the coating (11) consist of aluminium oxide and/or zinc oxide and/or silicon oxide.

4. A filter element (1) according to any one of claims 1 to 3,
characterized in that the binder (14) is soda water glass.

5. A filter element (1) according to any one of claims 1 to 4,
characterized in that the suspending liquid is water.

6. A filter element (1) according to any one of claims 1 to 5,
characterized in that the coating mass has the following composition:
14 parts by volume water
4 parts by volume kaolin
2 parts by volume feldspar
2 parts by volume starch flour
1 part by volume soda water glass
0.2 parts by volume sodium dyphosphate.

7. A filter element (1) according to any one of claims 1 to 6,
characterized in that the coating (11) consists of two layers, the outer layer being of finer porosity than the inner layer.

8. A hot fluid filter device, in particular for separating solid particles from hot flue gases in the temperature range between 120 and 800°C, comprising:
(a) a housing (13) subdivided by a first support (20) into a filtering space and a clean space (16);
(b) and a plurality of tubular filter elements (1) resiliently mounted in the filtering space between the first support (20) and a second support (21),
characterized in
(c) that the filter elements (1) are designed as indicated in any one of claims 1 to 7.

9. A filter device according to claim 8, characterized in
(a) that the filter elements (1) are each fixed to the first support (20) by means of an injector-shaped tubular bush (22),
(b) the tubular bush (22) having a collar (25), and a seal (23) being provided between the collar (25) and the first support (20) as well as a seal (24) being provided between the collar (25) and the filter element (1);
(c) that the filter elements (1) are each fixed to the second support (21) by means of a round bolt (29),
(d) the round bolt (29) having a collar (28) and a seal (32) being provided between the collar (28) and the filter element (1);
(e) and in that a spring (34) for resiliently clamping the filter element (1) between the first support (20) and the second support (21) and for pressing the same against the seals (23, 24, 32) is disposed between the collar (28) of the round bolt (29) and the second support (21).

10. A filter device according to claim 9,
characterized in that the tubular bush (22) comprises a portion (27) projecting beyond the collar (25) and protruding into the filter element (1) as well as a portion (26) projecting in the opposite direction beyond the collar (25) and reaching into the clean space (16) through an opening in the first support (20).

11. A filter device according to claim 9 or 10,
characterized in that the round bolt (29) has a portion (30) projecting beyond the collar (28) and protruding into the filter element (1), as well as a portion (31) projecting in the opposite direction beyond the collar (28) and protruding into a bore (33) in the second support (21).

12. A filter device according to claim 11,
characterized in that the oppositely projecting portion (31) of the round bolt (29) has annular grooves (35).

13. A filter device according to any one of claims 8 to 12,
characterized in that the first support (20) and/or the second support (21) is formed as a U-shaped brace.

14. A filter device according to any one of claims 8 to 13,
characterized in that several supports (20, 21) are provided in juxtaposed manner for one filter element row each.

15. A filter device according to any one of claims 8 to 14,
characterized in that both the first support (20) and the second support (21) extend substantially from one wall to an opposite wall of the filter housing (13).

16. A filter device according to any one of claims 8 to 15,
characterized in that clamping of the filter elements (1) between the first and second supports (20, 21) is effected in floating fashion.

17. A filter device according to any one of claims 9 to 16,
characterized in that the filter element (1) is slidable in axial direction against the action of the spring (34), to such an extent that the projecting portion (26) of the tubular bush (22) comes free from the opening of the first support (20).

18. A method of making a hot fluid filter element (1),
in particular for separating solid particles from hot flue gases in the temperature range between 120 and 800°C, comprising the following steps:
(a) producing a refractory, permeably porous supporting body (2) of inherent stability and made of bonded together particles (12) of ceramics and/or glass;
(b) applying a coating mass, containing particles of ceramics and/or glass as well as an inorganic binder (14), to the supporting body (2) on the surface of the filter element (1) to be acted upon by the hot fluid;
(c) and baking the applied coating mass, thereby forming a refractory, permeably porous coating (11) of the supporting body (2) of smaller pore size than the supporting body (2), with the coefficients of linear thermal expansion of the supporting body (2), the coating particles and of the binder (14) being substantially the same;
characterized in
(d) that the applied coating mass contains the coating particles, the binder (14), a suspending liquid and a component adapted to be burnt out;
(e) and that, by baking of the coating mass, the suspending liquid as well as the burning-out component are caused to evaporate and the porous coating (11) is formed of the coating particles bonded to each other and to the supporting body (2) by means of the binder (14), the pores (9) of the supporting body (2) at the coating surface thereof being filled, to at least part of their depth, by the coating particles bonded together by the binder (14), and the pore side of the coating (11) being smaller than 10 µm.

19. A method according to claim 18,
characterized in that aluminium oxide and/or zinc oxide and/or silicon oxide is used for the particles (12) of the supporting body (2).

20. A method according to claim 18 or 19,
characterized in that aluminium oxide and/or zinc oxide and/or silicon oxide is used for the particles of the coating (11).

21. A method according to any one of claims 18 to 20,
characterized in that the binder (14) used is soda water glass.

22. A method according to any one of claims 18 to 21,
characterized in that the suspending liquid used is water.

23. A method according to any one of claims 18 to 22,
characterized in that a coating mass with the following composition is used:
14 parts by volume water
4 parts by volume kaolin
2 parts by volume feldspar
2 parts by volume starch flour
1 part by volume soda water glass
0.2 parts by volume sodium dyphosphate.

24. A method according to any one of claims 18 to 23,
characterized in that the coating (11) is applied in two layers, the outer layer being of finer porosity than the inner layer.

25. A method according to any one of claims 18 to 24,
characterized in that the coating mass is applied by spraying on, spread-coating or immersion of the supporting body (2).

## Revendications

1. Elément de filtre pour fluide chaud (1) en particulier pour la séparation de particules solides de gaz de fumée chauds dans la plage de températures comprise entre 120 et 800 °C, comprenant :
(a) un substrat (2) de forme stable, résistant à la chaleur, perméable-poreux, formé de particules (12) en céramique et/ou en verre liées entre elles;
(b) et un revêtement (11) résistant à la chaleur, perméable-poreux sur la surface recevant le fluide chaud de l'élément de filtre (1), lequel revêtement (11) contient des particules de céramique et/ou de verre ainsi qu'un liant minéral (14) et est obtenu par cuisson d'une substance de revêtement déposée;
(c) dans lequel le revêtement (11) présente une dimension de pores plus faible que le substrat (2) et dans lequel les coefficients de dilatation thermique linéaires du substrat (2) des particules de revêtement et du liant (14) sont sensiblement égaux;
caractérisé en ce que
(d) le revêtement poreux (11) se compose des particules de revêtement liées au substrat (2) et entre elles au moyen du liant (14), la porosité du revêtement étant le résultat de la volatilisation d'un liquide de suspension et d'un composant pouvant être éliminé par cuisson de la substance de revêtement lors de la cuisson de celle-ci;
(e) en ce que les pores (9) du substrat (2) sont remplies à la surface du revêtement de ce dernier au moins sur une partie de leur profondeur par les particules de revêtement liées par le liant (14);
(f) et en ce que la dimension des pores du revêtement (11) est inférieure à 10 µm.

2. Elément de filtre (1) selon la revendication 1,
caractérisé en ce que
les particules (12) du substrat (2) sont composées d'oxyde d'aluminium, et/ou d'oxyde de zinc et/ou d'oxyde de silicium.

3. Elément de filtre (1) selon la revendication 1 ou 2,
caractérisé en ce que
les particules du revêtement (11) sont composées d'oxyde d'aluminium, et/ou d'oxyde de zinc et/ou d'oxyde de silicium.

4. Elément de filtre (1) selon l'une quelconque des revendications 1 à 3,
caractérisé en ce que
le liant (14) est du silicate de soude.

5. Elément de filtre (1) selon l'une quelconque des revendications 1 à 4,
caractérisé en ce que
le liquide de suspension est de l'eau.

6. Elément de filtre (1) selon l'une quelconque des revendications 1 à 5,
caractérisé en ce que
la substance de revêtement a la composition suivante :
14 parties en volume d'eau
4 parties en volume de kaolin
2 parties en volume de feldspath
2 parties en volume d'amidon
1 partie en volume de silicate de soude
0,2 partie en volume de dyphosphate de sodium.

7. Elément de filtre (1) selon l'une quelconque des revendications 1 à 6,
caractérisé en ce que
le revêtement (11) est constitué de deux couches, la couche extérieure présentant des pores plus fines que la couche intérieure.

8. Dispositif de filtre pour fluide chaud, en particulier pour la séparation de particules solides de gaz de fumée chauds dans la plage de températures comprise entre 120 et 800 °C, présentant :
(a) un boîtier (13) divisé par un premier support (20) en un compartiment de filtrage et un compartiment propre (16);
(b) et plusieurs éléments de filtre (1) fixés à ressort dans le compartiment de filtrage entre le premier support (20) et un second support (21),
caractérisé en ce que
(c) les éléments de filtre (1) sont constitués de la façon définie dans l'une quelconque des revendications 1 à 7.

9. Dispositif de filtre selon la revendication 8, caractérisé en ce que
(a) les éléments de filtre (1) sont fixés chacun au premier support (20) par l'intermédiaire d'une douille tubulaire (22),
(b) la douille tubulaire (22) présentant une collerette (25) et un joint d'étanchéité (23) étant prévu entre la collerette (25) et le premier support (20) ainsi qu'un joint d'étanchéité (24) entre la collerette (25) et l'élément de filtre (1);
(c) en ce que les éléments de filtre (1) sont fixés chacun au second support (21) par l'intermédiaire d'une cheville ronde (29);
(d) la cheville ronde (29) présentant une collerette (28) et un joint d'étanchéité (32) étant prévu entre la collerette (28) et l'élément de filtre (1);
(e) et en ce qu'un ressort (34) est disposé entre la collerette (28) de la cheville ronde (29) et le second support (21) pour le montage à ressort de l'élément de filtre (1) entre le premier support (20) et le second support (21) et son appui avec pression sur les joints d'étanchéité (23, 24, 32).

10. Dispositif de filtre selon la revendication 9,
caractérisé en ce que
la douille tubulaire (22) présente une zone (27) dépassant de la collerette (25) pénétrant dans l'élément de filtre (1) et une zone (26) opposée dépassant de la collerette (25) s'étendant par une ouverture du premier support (20) jusque dans le compartiment propre (16).

11. Dispositif de filtre selon la revendication 9 ou 10,
caractérisé en ce que
la cheville ronde (29) présente une zone (30) dépassant de la collerette (28) pénétrant dans l'élément de filtre (1) et une zone (31) opposée dépassant de la collerette (28) pénétrant dans un alésage (33) du second support (21).

12. Dispositif de filtre selon la revendication 11,
caractérisé en ce que
la zone dépassante opposée (31) de la cheville ronde (29) présente des gorges annulaires (35).

13. Dispositif de filtre selon l'une quelconque des revendications 8 à 12,
caractérisé en ce que
le premier support (20) et /ou le second support (21) a la forme d'une entretoise en forme de U.

14. Dispositif de filtre selon l'une quelconque des revendications 8 à 13,
caractérisé en ce que
plusieurs supports (20, 21) sont prévus côte à côte, chacun pour une rangée d'éléments de filtre.

15. Dispositif de filtre selon l'une quelconque des revendications 8 à 14,
caractérisé en ce que
le premier support (20) ainsi que le second support (21) vont tous deux sensiblement d'une paroi à une paroi opposée du boîtier de filtre (13).

16. Dispositif de filtre selon l'une quelconque des revendications 8 à 15,
caractérisé en ce que
le montage à ressort des éléments de filtre (1) entre le premier et le second supports (20, 21) est réalisé flottant.

17. Dispositif de filtre selon l'une quelconque des revendications 9 à 16,
caractérisé en ce que
l'élément de filtre (1) peut coulisser dans la direction axiale contre l'action du ressort (34) jusqu'à ce que la zone dépassante (26) de la douille tubulaire (22) soit Libérée de l'ouverture du premier support (20).

18. Procédé de fabrication d'un élément de filtre pour fluide chaud (1), en particulier pour la séparation de particules solides de gaz de fumée chauds dans la plage de températures comprise entre 120 et 800 °C, par les étapes suivantes :
(a) fabrication d'un substrat (2) de forme stable, résistant à la chaleur, perméable-poreux à partir de particules (12) de céramique et/ou de verre liées entre elles;
(b) dépôt d'une substance de revêtement qui contient des particules de céramique et/ou de verre ainsi qu'un liant minéral (14) sur le substrat (2) sur la surface de l'élément de filtre (1) destinée à recevoir le fluide chaud;
(c) et cuisson de la substance de revêtement, en réalisant un revêtement (11) résistant à la chaleur, perméable-poreux du substrat (2) dont la dimension de pores est inférieure à celle du substrat (2), les coefficients de dilatation thermique linéaires du substrat (2), des particules de revêtement et du liant (14) étant sensiblement égaux,
caractérisé en ce que
(d) la substance de revêtement déposée contient les particules de revêtement, le liant (14), un liquide de suspension et un composant pouvant être éliminé par cuisson;
(e) et en ce que le liquide de suspension ainsi que le composant pouvant être éliminé par cuisson sont volatilisés par la cuisson de la substance de revêtement et le revêtement poreux (11) est formé des particules de revêtement liées par le liant (14) entre elles et au substrat (2), les pores (9) du substrat (2) étant remplies à la surface de revêtement de ce dernier au moins sur une partie de leur profondeur par les particules de revêtement liées par le liant (14) et la dimension des pores du revêtement (11) étant inférieure à 10 µm.

19. Procédé selon la revendication 18,
caractérisé en ce que
l'on utilise de l'oxyde d'aluminium, et/ou de l'oxyde de zinc et/ou de l'oxyde de silicium pour les particules (12) du substrat (2).

20. Procédé selon la revendication 18 ou 19,
caractérisé en ce que
l'on utilise de l'oxyde d'aluminium, et/ou de l'oxyde de zinc et/ou de l'oxyde de silicium pour les particules du revêtement (11).

21. Procédé selon l'une quelconque des revendications 18 à 20,
caractérisé en ce que
l'on utilise du silicate de soude comme liant (14).

22. Procédé selon l'une quelconque des revendications 18 à 21,
caractérisé en ce que
l'on utilise de l'eau comme liquide de suspension.

23. Procédé selon l'un quelconque des revendications 18 à 22,
caractérisé en ce que
l'on utilise comme substance de revêtement la composition suivante :
14 parties en volume d'eau
4 parties en volume de kaolin
2 parties en volume de feldspath
2 parties en volume d'amidon
1 partie en volume de silicate de soude
0,2 partie en volume de dyphosphate de sodium.

24. Procédé selon l'une quelconque des revendications 18 à 23,
caractérisé en ce que
le revêtement (11) est déposé en deux couches la couche extérieure présentant des pores plus fines que la couche intérieure.

25. procédé selon l'une quelconque des revendications 18 à 24,
caractérisé en ce que
la substance de revêtement est déposée par pulvérisation, par enduction ou par immersion du substrat (2).
